# EUROPÄISCHE PATENTSCHRIFT

(11) **EP 1 034 068 B1**
(45) Veröffentlichungstag und Bekanntmachung des Hinweises auf die Patenterteilung: **04.12.2002**
(21) Anmeldenummer: 98965709.3
(22) Anmeldetag: 27.11.1998
(51) Int. Cl.: B29C 33/40, C08G 18/08

(54) **VERFAHREN ZUR HERSTELLUNG VON POLYURETHANGEGENSTÄNDEN**
METHOD FOR PRODUCING POLYURETHANE ARTICLES
PROCEDE DE PRODUCTION D'OBJETS EN POLYURETHANE

(30) Priorität: 28.11.1997 DE 19752871
(43) Veröffentlichungstag der Anmeldung: 13.09.2000
(73) Patentinhaber: FKS-Flüssigkunststoffverarbeitungs GmbH, 82377 Penzberg (DE)
(72) Erfinder: SCHMID, Konrad, D-83671 Benediktbeuern (DE)
(74) Vertreter: Weiss, Wolfgang, Dipl.-Chem. Dr.
(86) Internationale Anmeldenummer: EP9807684
(87) Internationale Veröffentlichungsnummer: WO99028106

(56) Entgegenhaltungen:
- DE-A- 2 309 798
- US-A- 3 789 100
- US-A- 3 871 060
- US-A- 5 292 462
- DATABASE WPI Section Ch, Week 8250 Derwent Publications Ltd., London, GB; Class A32, AN 82-07648J XP002097962 & JP 57 178811 A (TSUCHIYA SEISAKUSHO KK) , 4. November 1982

## Beschreibung

Die vorliegende Erfindung betrifft ein Verfahren zur Herstellung von Polyurethan-Formartikeln, wobei man ein fließfähiges Polyrethan-bildendes Reaktionsgemisch in eine Form zur Aushärtung überführt. Weiterhin werden neue Formen zur Herstellung von Polyurethangegenständen offenbart.

Bei der Herstellung von Polyurethan-Formartikeln wird eine fließfähige Polyurethanmasse durch Extrudieren, Einspritzen etc. in eine Form zur Aushärtung überführt. Bisher wurden hierfür gefräste Formen, z.B. aus Teflon oder aus mit Teflon beschichtetem Aluminium eingesetzt. Die Herstellung dieser Formen ist sehr kostspielig und aufwendig; überdies erlauben sie nur eine geringe Anzahl von Formtrennvorgängen ohne Zusatz von Formtrennmitteln in der Polyurethanmasse oder/und in der Form selbst. Die Verwendung solcher Formtrennmittel hat jedoch den Nachteil, daß die Oberfläche der Polyurethanformartikel verändert wird, was zu einer Verschlechterung der Produkteigenschaften, insbesondere bei weichen Gegenständen wie etwa Dichtungen führt. Außerdem reichern sich Rückstände der Formtrennmittel in der Form an, so daß eine häufige Reinigung erforderlich ist.

In JP57178811 wird eine Polypropylen-Form zur Herstellung von Polyurethan-Elastomeren ohne Formtrennmittel beschrieben, welche zur Herstellung von Filterelementen zur Luftreinigung verwendet werden kann. Die beschriebene Form wird zur Festigung von Metallrahmen gehalten und ist mit einer Polyurethan-Spritzvorrichtung ausgerüstet, mit welcher die Polyurethan-Lösung auf das Filtermaterial aufgespritzt und anschließend durch Erwärmen erhärtet werden kann. Das genaue Herstellungsverfahren dieser Polypropylen-Form wird jedoch nicht genannt.

Das der Erfindung zugrundeliegende Problem bestand darin, die Nachteile, die bei Verwendung der Formen des Standes der Technik entstehen, mindestens teilweise zu beseitigen. Insbesondere sollten Formen bereitgestellt werden, die auf einfache Weise erhältlich sind, bei denen man auf die Verwendung von Formtrennmitteln zumindest weitgehend verzichten kann und die eine Vielzahl von Formtrennvorgängen ohne Reinigungsprozedur ermöglichen.

Überraschenderweise wurde festgestellt, daß bei Verwendung von Formen aus wärmeverformtem Kunststoff ausgewählt aus Polyethylen oder Polyethylen-Copolymeren Nachteile des Standes der Technik vermieden werden können. Ein Gegenstand der vorliegenden Erfindung ist somit ein Verfahren zur Herstellung von Polyurethan-Formartikeln, wobei man ein fließfähiges Polyurethan-bildendes Reaktionsgemisch in eine Form zur Aushärtung überführt, welches dadurch gekennzeichnet ist, daß man eine Form aus wärmeverformtem Kunststoff ausgewählt aus Polyethylen oder Polyethylen-Copolymeren verwendet.

Zweckmäßigerweise wird für das erfindungsgemäße Verfahren eine Form aus einem wärmeverformbaren Polyethylen oder Polyethylen-Copolymer verwendet, das eine Erweichungstemperatur hat, die mindestens 10°C, vorzugsweise mindestens 20°C höher als die Temperatur des in die Form überführten Polyurethan-bildendes Reaktionsgemisches ist.

Grundsätzlich kann die Form aus beliebigen Polyethylen oder Polyethylen-Copolymer-Materialien hergestellt werden, die eine Wärmeverformung, insbesondere eine spannlose Wärmeverformung erlauben. Besonders bevorzugt sind solche Kunststoffe, die eine Verformung durch einen Tiefziehvorgang, z.B. Vakuumtiefziehen, erlauben. Weiterhin ist es bevorzugt, wenn die Kunststoffe eine Oberfläche mit guten Trennungseigenschaften aufweisen.

Als Kunststoffe im erfindungsgemäßen Verfahren verwendet man Polyethylen oder Polyethylen-Copolymere. Am meisten bevorzugt wird ein Polyethylen verwendet. Ein solches Polyethylen ist beispielsweise PE13A3, das von Thyssen-Schulte kommerziell erhältlich ist.

Das erfindungsgemäße Verfahren eignet sich zu Herstellung beliebiger Polyurethan-Formartikel. Diese Polyurethane können auf übliche Weise durch Polyaddition aus Isocyanaten mit aktiven Wasserstoff-enthaltenden Verbindungen, z.B. Polyalkoholen hergestellt werden. In vielen Fällen wird zur Herstellung von Polyurethanen ein Präpolymer mit terminalen Isocyanatgruppen eingesetzt, welches bei Zusatz weiterer Verbindungen mit aktiven Wasserstoffatomen, z.B. auch mit Feuchtigkeit aus der Umgebung unter Kettenverlängerung und gegebenenfalls Vernetzung aushärtet. Zur Herstellung von Polyurethanen können neben Polyalkoholen als aktiven Wasserstoff enthaltende Verbindungen auch Polyamine eingesetzt werden.

Besonders bevorzugt eignet sich das erfindungsgemäße Verfahren zur Herstellung geschäumter Polyurethan-Formartikel. Hier werden dem Polyurethan-bildenden Reaktiongemisch Treibmittel, wie etwa Kohlenwasserstoffe, Chlorfluorkohlenwasserstoffe oder anorganische Treibmittel wie etwa Wasser oder CO₂ zugesetzt. Besonders geeignet ist das erfindungsgemäße Verfahren zur Herstellung von Weichschaumartikeln, z. B. mit einer Härte von 5 bis 20 Shore A, wie etwa Dichtungen.

Darüber hinaus kann das Polyurethan-bildende Reaktionsgemisch weitere übliche Bestandteile wie Katalysatoren, Füllstoffe, Farbstoffe, Stabilisatoren, Flammschutzmittel etc. enthalten.

Polyethylen-Copolymeren ermög-lichen die Verwendung eines Polyurethan-bildenden Reaktionsgemisches, welches im wesentlichen oder sogar vollständig frei von einem Formtrennmittel ist. Auch die Kunststoff-Form muß nicht mit einem Formtrennmittel vorbehandelt werden. Dennoch ermöglicht die erfindungsgemäße Kunststoff-Form eine Anzahl von mindestens 100 und besonders bevorzugt von mindestens 500 Formtrennvorgängen. Dies führt zu einer erheblichen Arbeitsvereinfachung und Kostenersparnis.

Weiterhin wird die Erfindung durch das nachfolgende Beispiel erläutert.

### Beispiel

Durch Vakuumtiefziehen wird eine Kunststofform aus dem Polyethylen PE13A von Thyssen-Schulte angefertigt, die für die Herstellung von Polyurethandichtungen geeignet ist.

Die Kontur der Form wird mit einer Dosiervorrichtung abgefahren und das Polyurethan-bildende Reaktionsgemisch (2-K-PUR) eingetragen. Nach einer Aushärtezeit von ca. 20 min kann die fertige Dichtung aus der tiefgezogenen Form entnommen werden.

Die Form kann erneut eingesetzt werden. Dieser Vorgang kann beliebig oft wiederholt werden. Dabei ist darauf zu achten, daß die tiefgezogene Form nicht verkratzt wird.

## Patentansprüche

1. Verfahren zur Herstellung von Polyurethan-Formartikeln, wobei man ein fließfähiges Polyurethan-bildendes Reaktionsgemisch in eine Form zur Aushärtung überführt,
**dadurch gekennzeichnet,**
**daß** man eine Form aus wärmeverformtem Kunststoff ausgewählt aus Polyethylen oder Polyethylen-Copolymeren verwendet.

2. Verfahren nach Anspruch 1,
**dadurch gekennzeichnet,**
**daß** man eine Form aus einem Kunststoff verwendet, der eine Erweichungstemperatur hat, die um mindestens 10°C höher als die Temperatur des in die Form überführten Reaktionsgemisches ist.

3. Verfahren nach Anspruch 1 oder 2,
**dadurch gekennzeichnet,**
**daß** man für die Kunststoff-Form einen spannlos wärmeverformten Kunststoff verwendet.

4. Verfahren nach einem der Ansprüche 1 bis 3,
**dadurch gekennzeichnet,**
**daß** man Polyurethanweichschäume herstellt.

5. Verfahren nach Anspruch 4,
**dadurch gekennzeichnet,**
**daß** man Dichtungen aus Polyurethanweichschäumen herstellt.

6. Verfahren nach Anspruch 4 oder 5,
**dadurch gekennzeichnet,**
**daß** die Polyurethanweichschäume eine Härte von 5 bis 20 Shore A aufweisen.

7. Verfahren nach eine der Ansprüche 1 bis 6,
**dadurch gekennzeichnet**,
daßman ein Polyurethan-bildendes Reaktionsgemisch verwendet, das im wesentlichen frei von einem Formtrennmittel ist.

8. Verfahren nach einem der Ansprüche 1 bis 7,
**dadurch gekennzeichnet,**
**daß** die Kunststoff-Form nicht mit einem Formtrennmittel vorbehandelt wird.

9. Verfahren nach einem der vorhergehenden Ansprüche,
**dadurch gekennzeichnet,**
**daß** man die Kunststoff-Form mindestens 100 mal verwendet.

## Claims

1. Method for producing moulded polyurethane articles in which a flowable polyurethane-forming reaction mixture is transferred into a mould to cure,
**characterized in that**
a mould made of a thermoformed plastic selected from polyethylene or polyethylene copolymers is used.

2. Method as claimed in claim 1,
**characterized in that**
a mould is used which is made of a plastic having a softening temperature which is at least 10°C higher than the temperature of the reaction mixture that is transferred into the mould.

3. Method as claimed in claim 1 or 2,
**characterized in that**
a plastic which has been thermoformed without cutting is used for the plastic mould.

4. Method as claimed in one of the claims 1 to 3,
**characterized in that**
soft polyurethane foams are produced.

5. Method as claimed in claim 4,
**characterized in that**
seals made of soft polyurethane foams are produced.

6. Method as claimed in claim 4 or 5,
**characterized in that**
the soft polyurethane foams have a shore A hardness of 5 to 20.

7. Method as claimed in one of the claims 1 to 6,
**characterized in that**
a polyurethane-forming reaction mixture is used which is essentially free from mould release agents.

8. Method as claimed in one of the claims 1 to 7,
**characterized in that**
the plastic mould is not pretreated with a mould release agent.

9. Method as claimed in one of the previous claims,
**characterized in that**
the plastic form is used at least 100 times.

## Revendications

1. Procédé pour la fabrication d'articles moulés en polyuréthanne, dans lequel on transfère un mélange réactionnel à écoulement libre ou coulant formant du polyuréthanne dans un moule en vue du durcissement,
**caractérisé en ce que**,
l'on utilise un moule en matière synthétique thermoformé, choisi parmi le polyéthylène ou des copolymères de polyéthylène.

2. Procédé selon la revendication 1,
**caractérisé en ce que**,
l'on utilise un moule en matière synthétique qui présente une température de ramollissement qui est d'au moins 10°C supérieure à la température du mélange réactionnel transféré dans le moule.

3. Procédé selon la revendication 1 ou 2,
**caractérisé en ce que**,
pour le moule en matière synthétique, on utilise une matière synthétique thermoformée sans mise sous contrainte.

4. Procédé selon l'une des revendications 1 à 3,
**caractérisé en ce que**,
l'on prépare des mousses souples de polyuréthanne.

5. Procédé selon la revendication 4,
**caractérisé en ce que**,
l'on fabrique des joints d'étanchéité en mousses souples de polyuréthanne.

6. Procédé selon la revendication 4 ou 5,
**caractérisé en ce que**,
les mousses souples de polyuréthanne présentent une dureté de 5 à 20 SHORE A.

7. Procédé selon l'une des revendications 1 à 6,
**caractérisé en ce que**,
l'on utilise un mélange réactionnel formant le polyuréthanne qui est sensiblement exempt d'agent de démoulage.

8. Procédé selon l'une des revendications 1 à 7,
**caractérisé en ce que**,
le moule de matière synthétique n'est pas traité préalablement avec un agent de démoulage.

9. Procédé selon l'une des revendications précédentes,
**caractérisé en ce que**,
l'on utilise le moule en matière synthétique au moins 100 fois.
